# EUROPÄISCHE PATENTANMELDUNG

(11) **EP 3 182 424 A1**
(43) Veröffentlichungstag der Anmeldung: **21.06.2017**
(21) Anmeldenummer: 16198158.4
(22) Anmeldetag: 10.11.2016
(51) Int. Cl.: H01F 27/29, H01Q 1/32, B60R 25/04, H01H 13/52

(54) **ZUGANGSBERECHTIGUNGSVORRICHTUNG**

(30) Priorität: 14.12.2015 DE 102015225129; 17.12.2015 DE 102015122151; 26.01.2016 DE 102016101286
(71) Anmelder: Huf Hülsbeck & Fürst GmbH & Co. KG, 42551 Velbert (DE)
(72) Erfinder: Jonghwan, Kim, 31417 567 Eumbongro, POSCO APT 116-904 (KR); Huiwon, Kim, 16692 Suwon-city (KR); Dobrea, Petru-Paul, 81671 München (DE)

(57) **Zusammenfassung**

Die Erfindung betrifft Zugangsberechtigungsvorrichtung (1), insbesondere einen Start-Stopp-Taster, für ein Kraftfahrzeug aufweisend ein Gehäuse (2) zur Aufnahme einer Leiterplatte (5) und aufweisend einen Spulenträger (7), welcher eine Spule (6) umfasst, die zur Kommunikation mit einer ID-Geber vorgesehen ist, und welcher zur Aufnahme von mindestens zwei Kontaktelemente (15, 16) vorgesehen ist, die mit der Spule (6) verbindbar sind, wobei die Verbindung der Kontaktelemente (15, 16) mit dem Spulenträger (7) mittels einer Pressverbindung ausgebildet ist.

## Beschreibung

Die Erfindung betrifft eine Zugangsberechtigungsvorrichtung, insbesondere einen Start-Stopp-Taster, für ein Kraftfahrzeug aufweisend ein Gehäuse zur Aufnahme einer Leiterplatte und aufweisend einen Spulenträger, welcher eine Spule umfasst, die zur Kommunikation mit einem ID-Geber vorgesehen ist, und welcher zur Aufnahme von mindestens zwei Kontaktelemente vorgesehen ist, die mit der Spule verbindbar sind.

Aus dem Stand der Technik sind Zugangsberechtigungsvorrichtungen bekannt, welche als Start-Stopp-Taster für ein Kraftfahrzeug ausgebildet sind. Dabei weist der Start-Stopp-Taster ein Gehäuse auf, in welchem eine Leiterplatte angeordnet ist. Außerhalb des Gehäuses ist ein Spulenträger angeordnet, welcher mit einer Spule versehen ist. Ferner umfasst der Spulenträger Kontaktelemente, welche in den Spulenträger eingespritzt sind. Für das Einspritzen der Kontaktelemente wird ein entsprechendes Werkzeug mit einer fest definierten Form benötigt. Werden nun andere Kontaktelemente verwendet, muss auch die Form des Werkzeugs verändert werden. Dies verursacht weitere Kosten für die Herstellung der Zugangsberechtigungsvorrichtung.

Die Aufgabe der Erfindung ist es daher, die Kosten zur Herstellung der Zugangsberechtigungsvorrichtung zu senken.

Die Aufgabe wird dadurch gelöst, dass die Verbindung der Kontaktelemente mit dem Spulenträger mittels einer Pressverbindung ausgebildet ist. Mit Hilfe der kraft- und/oder formschlüssigen Pressverbindung lassen sich die Kontaktelemente in dem Spulenträger kostengünstig anordnen. Bei einer konstruktiven Veränderung der Kontaktelemente, kann somit auf die Konstruktion eines weiteren Werkzeugs zur Herstellung des Spulenträgers in vorteilhafterweise verzichtet werden. Wenn die Spulenträger fertigstellt sind, kann mit Hilfe der simplen Pressverbindung, bei welcher die Kontaktelemente in eine Öffnung und/oder einen Hohlraum und/oder eine Durchgangsöffnung gesteckt oder mit Hilfe einer Vorrichtung eingeschossen werden, eine kostengünstige und sichere Verbindung bereitgestellt werden. Dabei weist die Öffnung und/oder der Hohlraum und/oder die Durchgangsöffnung im Querschnitt geringere Maße, insbesondere einen geringeren Durchmesser auf, als der Querschnitt, insbesondere der Durchmesser, der Kontaktelemente.

Nach einer bevorzugten Ausführungsform der Zugangsberechtigungsvorrichtung kann vorgesehen sein, dass nach dem Herstellen der Pressverbindung die Spule und die Kontaktelementen miteinander verbindbar sind, insbesondere durch eine Lötverbindung miteinander verbindbar sind. Aufgrund des nachträglichen Verbindens nach dem Durchführen der Pressverbindung, wird das Anbringen der Kontaktelemente an der Spule vereinfacht. Des Weiteren können Drahtenden der Spule kürzer ausgebildet sein, wenn die Verbindung der Kontaktelemente mit der Spule nach dem Durchführen der Pressverbindung durchgeführt wird, weil sich dann die Kontaktelemente im Nahbereich der Spule befinden.

Die Zugangsberechtigungsvorrichtung kann zuverlässig ausgebildet werden, wenn die Pressverbindung zwischen dem Spulenträger und den Kontaktelemente nachträglich unlösbar ausgebildet ist. Somit wird auch während der Fahrt des Kraftfahrzeugs, insbesondere bei auftretenden Erschütterungen, sichergestellt, dass die Kontaktelemente fest im Spulenträger verbleiben.

Eine sichere und zuverlässige Lagerung der Kontaktelemente kann gewährleistet werden, wenn der Spulenträger eine Kontaktelementaufnahme zur Anordnung der Kontaktelemente aufweist.

Die Kosten zur Herstellung des Spulenträgers können gesenkt werden, wenn die Kontaktelementaufnahme einteilig mit dem Spulenträger ausgebildet ist.

Die Funktionalität der Spule kann verbessert werden, wenn der Spulenträger eine rundförmige, insbesondere eine kreisförmige, Aufnahme zur Anordnung der Spule aufweist. Durch die rundförmige, insbesondere kreisförmige, Aufnahme lässt sich die Spule einfach und sicher durch einen Werker oder eine Maschine montieren.

Die Anzahl der Komponenten des Spulenträgers, insbesondere des Kontaktelements, kann verringert werden, wenn die Kontaktelemente vier Anschlüsse aufweisen, wobei ein erster und ein zweiter Anschluss zum Herstellen der elektrischen Verbindung mit der Spule dienen, und wobei ein dritter und ein vierter Anschluss zum elektrischen Verbinden mit der Leiterplatte dienen. Durch diese Anordnung kann die Konstruktion des Spulenträgers als auch des Kontaktelements einfacher und kostengünstiger sowie kompakter ausgestaltet werden.

Eine zuverlässige und sichere Verbindung zwischen der Spule und dem Kontaktelement kann sichergestellt werden, wenn die Spule aus einem Draht mit einem ersten Drahtende und einem zweiten Drahtende ausgebildet ist, wobei der erste Anschluss des ersten Kontaktelements einen ersten im Wesentlichen u-förmigen oder im Wesentlichen v-förmigen Abschnitt und der zweite Anschluss des zweiten Kontaktelements einen zweiten im Wesentlichen u-förmigen oder im Wesentlichen v-förmigen Abschnitt aufweist, wobei der erste u-förmige oder erste v-förmige Abschnitt zur Aufnahme des ersten Drahtendes ausgebildet ist und der zweite u-förmige oder zweite v-förmige Abschnitt zur Aufnahme des zweiten Drahtendes ausgebildet ist. Durch die u- förmige oder v-förmige Ausgestaltung der Kontaktelemente, insbesondere des ersten und zweiten Kontaktelements, wird das Anlöten oder das Anschweißen der Drahtenden vereinfacht, weil die u-förmige oder v-förmige Ausgestaltung der Kontaktelemente zur Aufnahme und Lagerung der Drahtenden dient, wenn der Lötprozess oder der Schweißprozess zur Verbindung der Drahtenden mit dem jeweiligen Kontaktelementen durchgeführt wird.

Ein Lösen der Drahtenden von den Kontaktelementen kann verhindert werden, wenn das erste Drahtende innerhalb des ersten u-förmige oder ersten v-förmige Abschnitts verlötet oder verschweißt ist und das zweite Drahtende innerhalb des zweiten u-förmige oder zweiten v-förmige Abschnitts verlötet oder verschweißt ist. Durch diese Maßnahme wird in vorteilhafterweise sichergestellt, dass die technische Ausfallwahrscheinlichkeit der Zugangsberechtigungsvorrichtung aufgrund eines Ablösen der Drahtenden von dem jeweiligen Kontaktelement verringert werden kann. Eine sichere und kostengünstige Verbindung des Gehäuses mit dem Spulenträger wird sichergestellt, wenn der Spulenträger mindestens ein erstes Federelement und ein zweites Federelement zur Verbindung des Spulenträgers mit dem Gehäuse und/oder der Leiterplatte aufweist.

Eine zuverlässige und sichere Verbindung des Spulenträgers mit dem Gehäuse und/oder der Leiterplatte kann bereitgestellt werden, wenn die Federelemente sperrförmig ausgebildet sind, wobei der Kopf des Federelements einen ersten Kopfabschnitt und einen zweiten Kopfabschnitt umfasst, die durch einen Spalt voneinander getrennt sind. Der Spalt wird beim Einführen der Federelemente, insbesondere des jeweiligen Kopfes, in die entsprechende Öffnung auf der Leiterplatte verringert. Durch den Spalt wird eine Bewegung des ersten und zweiten Kopfabschnitts beim Einführen in die Öffnung der Leiterplatte ermöglicht. Dadurch wird in vorteilhafterweise ausgeschlossen, dass beim Einführen des Federelements in die Öffnung der Leiterplatte das Federelement, insbesondere die beiden Kopfabschnitte beschädigt werden.

Die Montage des Spulenträgers an der Leiterplatte wird vereinfacht, wenn der Spulenträger mindestens ein Führungselement aufweist, welches zur Verbindung mit der Leiterplatte dient.

Die Konstruktion des Spulenträgers kann kostengünstig und einfach ausgestaltet werden, wenn das Führungselement und/oder das Federelement einteilig mit dem Spulenträger ausgebildet ist.

Die Montage des Spulenträgers kann vereinfacht werden, wenn der Spulenträger außerhalb des Gehäuses angeordnet ist und die Leiterplatte innerhalb des Gehäuses angeordnet ist.

Der Spulenträger, insbesondere die Spule kann vor äußeren Einflüssen besser geschützt werden, wenn der Spulenträger und die Leiterplatte innerhalb des Gehäuses angeordnet sind.

Der Spulenträger kann klapperfrei und sicher im Gehäuse, insbesondere in dem zylinderförmigen Gehäuse und/oder dem Deckel, gelagert werden, wenn der Spulenträger mindestens einen Befestigungsabschnitt aufweist, der beim Einführen des Spulenträgers in das Gehäuse, insbesondere in das zylinderförmige Gehäuse, bewegbar ausgebildet ist, wenn der Befestigungsabschnitt eine innerhalb des Gehäuses, insbesondere des zylinderförmigen Gehäuses, angeordnete Wandung kontaktiert.

Die erfindungsgemäße Zugangsberechtigungsvorrichtung wird anhand eines Ausführungsbeispiels beschrieben. Die Figuren zeigen:
- Figur 1: eine Zugangsberechtigungsvorrichtung in einer perspektivischen Ansicht von vorne,
- Figur 2: die Zugangsberechtigungsvorrichtung in einer perspektivischen Ansicht von hinten,
- Figur 3: die Zugangsberechtigungsvorrichtung gezeigt in einer Explosionsansicht,
- Figur 4: einen Spulenträger der Zugangsberechtigungsvorrichtung in einer Ansicht von oben,
- Figur 5: einen Spulenträger der Zugangsberechtigungsvorrichtung in einer Ansicht von unten,
- Figur 6: Kontaktelemente zu Anordnung im Spulenträger,
- Figur 7: eine Spule für den Spulenträger,
- Figur 8: den Spulenträger vor der Montage der Kontaktelemente,

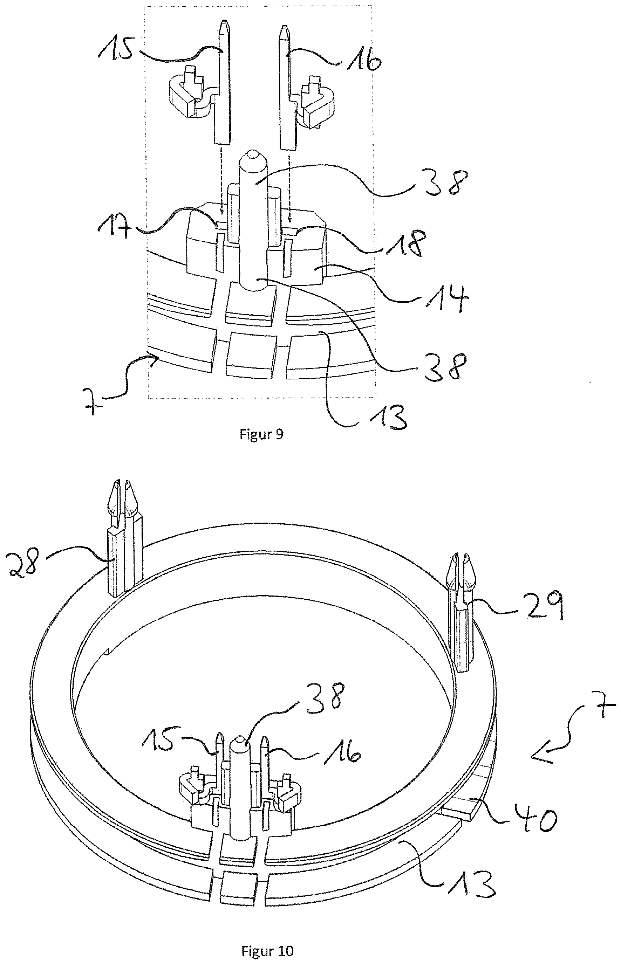

- Figur 9: den Spulenträger vor der Montage der Kontaktelemente gemäß einem vergrößerten Ausschnitt,
- Figur 10: den Spulenträger nach der Montage der Kontaktelement,

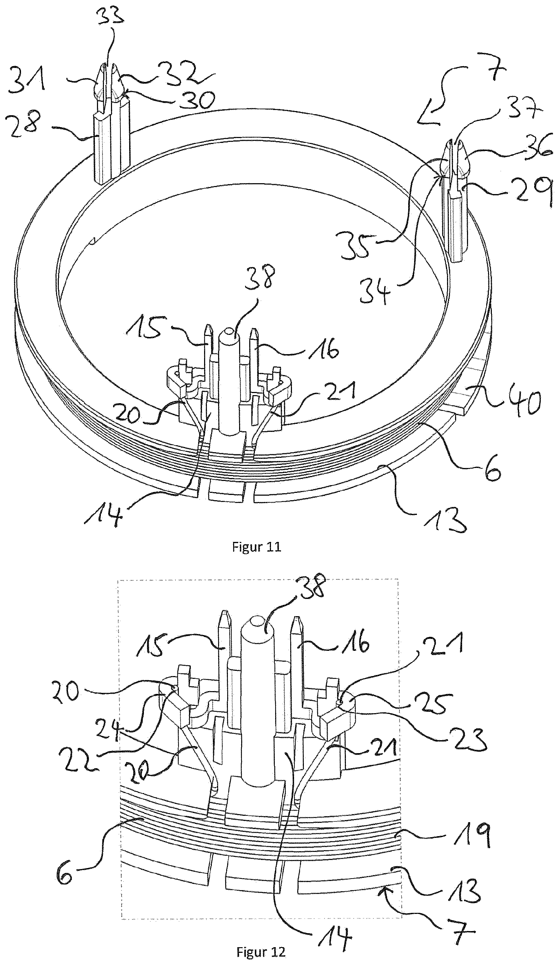

- Figur 11: den Spulenträger aufweisend die Kontaktelemente und die Spule,
- Figur 12: den Spulenträger aufweisend die Kontaktelemente und die Spule gemäß einem vergrößerten Ausschnitt,

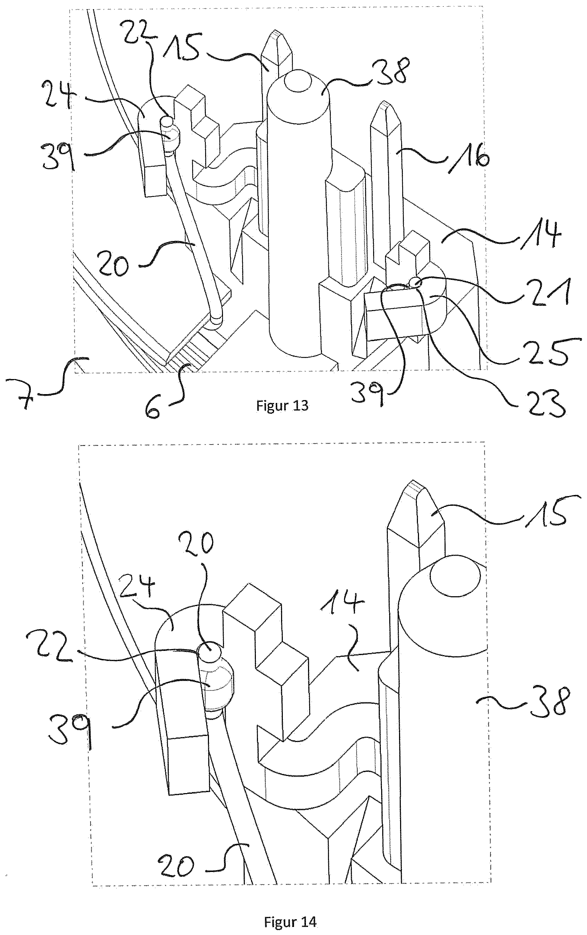

- Figur 13: den Spulenträger aufweisend die Kontaktelemente und die Spule, die mittels Lotstellen miteinander verbunden sind,
- Figur 14: einen Ausschnitt des Spulenträgers, welcher die Verbindung der Kontaktelemente mit der Spule näher zeigt.

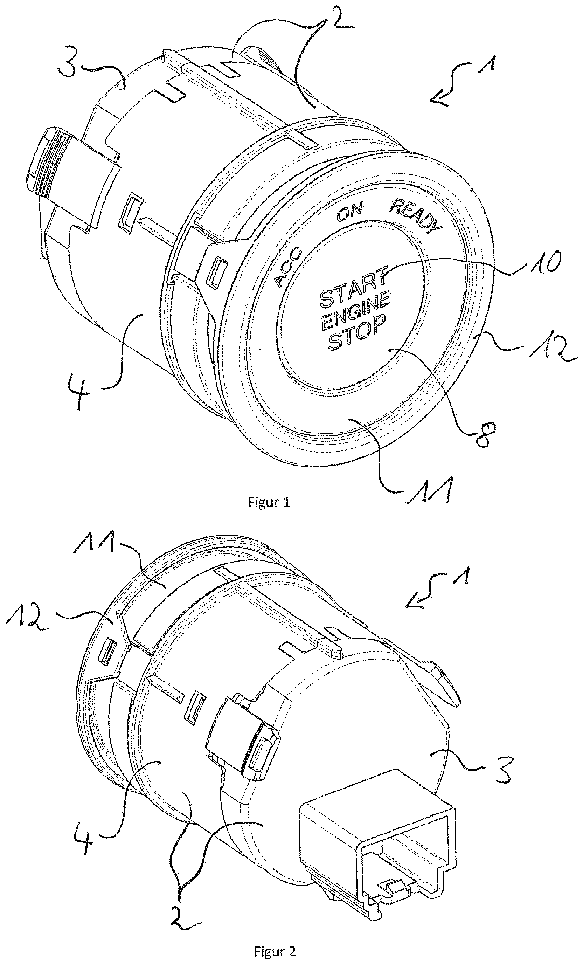

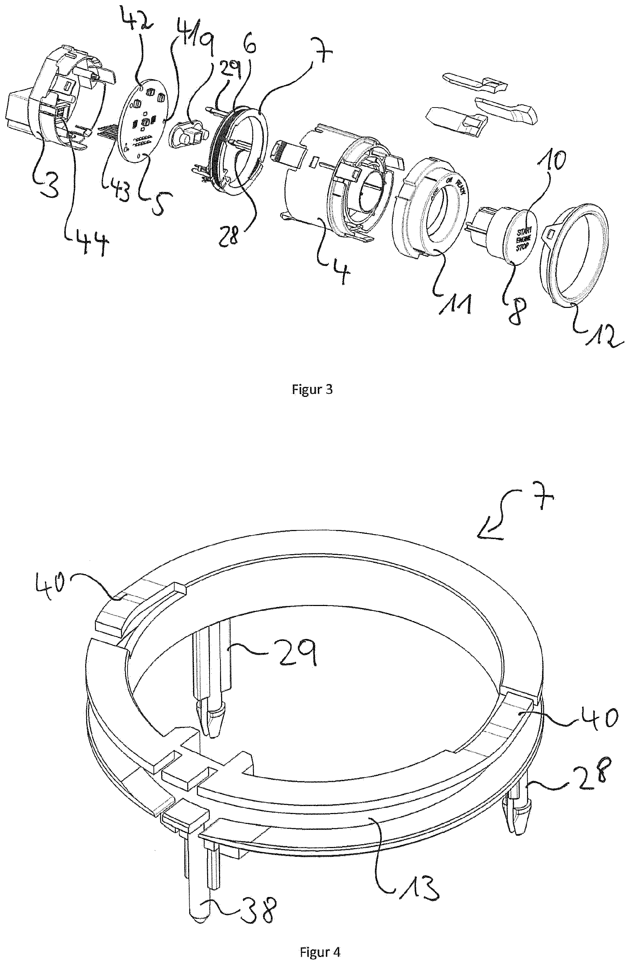

Die Figuren 1 und 2 zeigen eine als Start-Stopp-Taster ausgebildete Zugangsberechtigungsvorrichtung 1 für ein Kraftfahrzeug, wobei in der Figur 3 der Start-Stopp-Taster gemäß einer Explosionsansicht dargestellt. Die Zugangsberechtigungsvorrichtung 1 weist ein Gehäuse 2 auf, mit einem ersten Gehäusebauteil, welcher als Deckel 3 ausgebildet ist und einem zweiten Gehäusebauteil, welches als zylinderförmiges Gehäuse 4 ausgestaltet ist. Der Deckel 3 dient zur Aufnahme einer Leiterplatte 5, welche die Steuereinrichtung zum Betreiben der Zugangsberechtigungsvorrichtung 1 umfasst. Auf der Leiterplatte 5 ist ein mit einer Spule 6 versehener Spulenträger 7 angeordnet, welcher Befestigungsabschnitte 40 aufweist, die zur sicheren und klapperfreien Verbindung, insbesondere zur Spieleliminierung, mit dem Gehäuse 2, insbesondere mit dem zylinderförmigen Gehäuse 4 und dem Deckel 3 dienen. Die Spule 6 dient zur Kommunikation mit einem nicht näher dargestellten ID-Geber. Des Weiteren sind auf der Leiterplatte 5 Kontaktierungen und/oder alternativ Mikroschalter angeordnet, welche durch ein Betätigen eines Betätigungselements 8 und einer elastischen Haube 9 schaltbar sind. Dazu befindet sich die Haube 9 über den Mikroschaltern und wird beim Drücken des Betätigungselements 8 kontaktiert. Auf dem Betätigungselement 8 selber ist ein Schriftzug 10 aufgebracht "Start-Engine-Stop", um den Benutzer darauf hinzuweisen, dass durch das Betätigen des Betätigungselements 8 der Motor des Kraftfahrzeugs angeschaltet oder ausgeschaltet werden kann. Um das Betätigungselement 8 sicher in dem zylinderförmigen Gehäuse 4 zu lagern, wird das Betätigungselement 8 innerhalb des Gehäuses 4 verklipst. Ferner ist ein Ring 11 am zylinderförmigen Gehäuse 4 angeordnet, welcher durch eine auf der Leiterplatte 5 angeordnete Lichtquelle beleuchtbar ist. Der Ring 11 wird durch einen Sicherungsring 12 am Gehäuse 4 befestigt, in dem der Sicherungsring 12 mit dem zylinderförmigen Gehäuse 4 verklipst wird. Des Weiteren ist aus Designgründen der Sicherungsring 12 zumindest teilweise mit einem umlaufenden Chromring versehen. Alternativ könnte auch der Ring 11 am zylinderförmigen Gehäuse 4 befestigt, insbesondere angeklipst, sein und gleichzeitig der Sicherungsring 12 formschlüssig und/oder kraftschlüssig am Ring 11 befestigt werden. Dann könnte in vorteilhafterweise auf eine Verklipsung des Sicherungsring 12 mit dem zylinderförmigen Gehäuse 4 verzichtet werden.

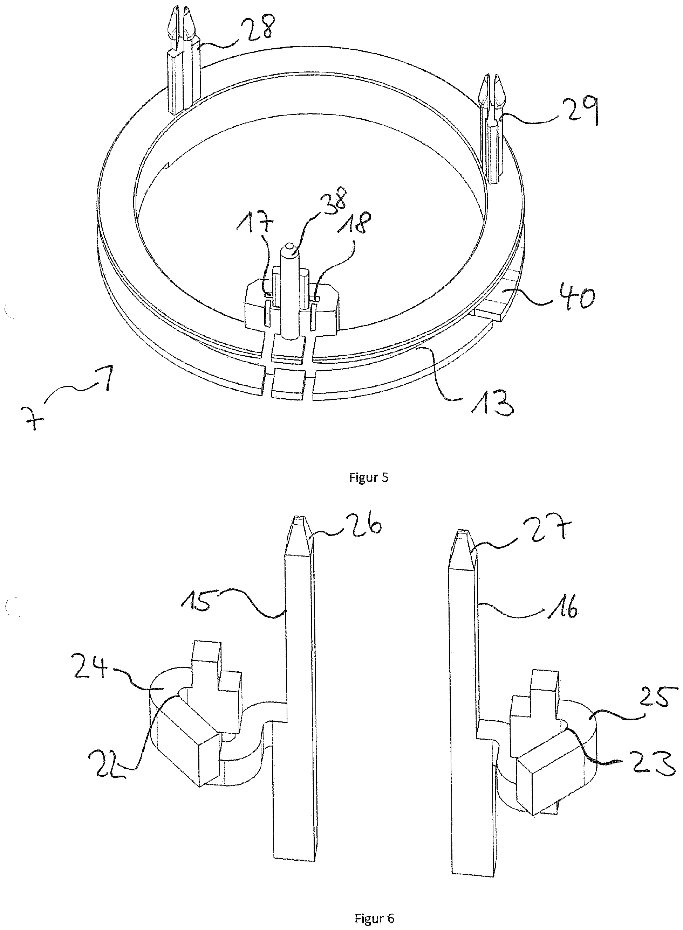

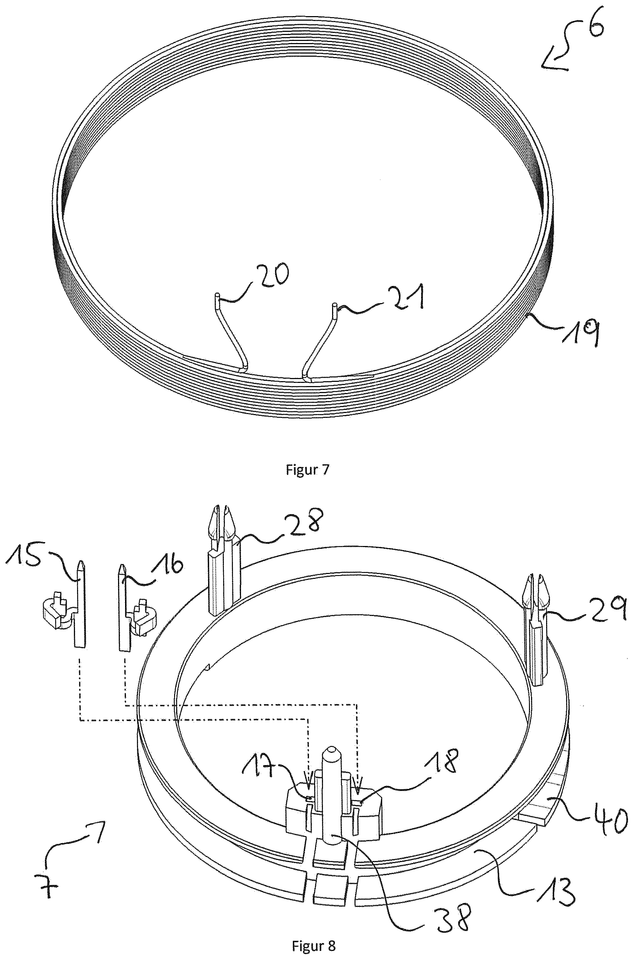

In den Figuren 4 und 5 ist der Spulenträger 7 näher dargestellt. Der Spulenträger 7 weist eine rundförmige, insbesondere kreisförmige, Aufnahme 13 zur Anordnung der Spule 6 auf. Ferner ist auf dem Spulenträger 7 eine einteilig mit dem Spulenträger 7 ausgebildete Kontaktelementaufnahme 14 zur Aufnahme von zwei Kontaktelementen 15, 16 vorgesehen. Die Kontaktelemente 15, 16 werden mit dem Spulenträger 7, insbesondere mit dessen Kontaktelementaufnahme 14, mittels einer Pressverbindung verbunden. Dabei können die Kontaktelemente 15, 16 in die jeweiligen Öffnungen 17, 18 eingeschossen werden, so dass eine kraft- und/oder formschlüssige Verbindung zwischen dem Spulenträger 7 und den Kontaktelementen 15, 16 hergestellt wird. Dabei ist die Pressverbindung so sicher ausgebildet, dass die Kontaktelemente 15, 16 nachträglich unlösbar mit dem Spulenträger 7 verbunden sind. Erst durch ein Zerstören der Kontaktelementaufnahme 14 wären die Kontaktelemente 15, 16 entfernbar. Wie bereits zuvor erwähnt, dient der Spulenträger 7 weiter zur Aufnahme der in der Figur 7 gezeigten Spule 6. Die Spule 6 ist als Draht 19 ausgebildet und wird auf den Spulenträger 7 gewickelt, so dass nach dem Wicklungsvorgang ein erstes Drahtende 20 und ein zweites Drahtende 21 aus dem Spulenkörper 7 hervorstehen. Um die Verbindung der Spule 6 mit den Kontaktelementen 15, 16 nach dem Herstellen der Pressverbindung sicherzustellen, wird das erste Drahtende 20 mit einem ersten Anschluss 22 des ersten Kontaktelements 15, insbesondere mittels einer Schweißverbindung 39 oder alternativ einer Lötverbindung, verbunden und das das zweite Drahtende 21 mit einem zweiten Anschluss 23 des zweiten Kontaktelements 16, insbesondere mittels der Schweißverbindung 39 oder alternativ einer Lötverbindung, verbunden. Dazu weist der erste Anschluss 22 des ersten Kontaktelements 15 einen ersten im Wesentlichen u-förmigen oder im Wesentlichen v-förmigen Abschnitt 24 und der zweite Anschluss 23 des zweiten Kontaktelements 16 einen zweiten im Wesentlichen u-förmigen oder im Wesentlichen v-förmigen Abschnitt 25 aufweist, wobei der erste u-förmige oder erste v-förmige Abschnitt 24 zur Aufnahme des ersten Drahtendes 20 ausgebildet ist und der zweite u-förmige oder zweite v-förmige Abschnitt 25 zur Aufnahme des zweiten Drahtendes 21 ausgebildet ist. Sehr sicher und gut durchführbar ist die Schweißverbindung 39 oder alternativ die Lötverbindung, wenn das erste Drahtende 20 innerhalb des ersten u-förmige oder ersten v-förmige Abschnitts 24 verschweißt oder alternativ verlötet ist und das zweite Drahtende 21 innerhalb des zweiten u-förmige oder zweiten v-förmige Abschnitts 25 verschweißt oder alternativ verlötet ist.

Des Weiteren ist das erste Kontaktelemente 15 mit einem dritten Anschluss 26 versehen und das zweite Kontaktelement 16 mit einem vierten Anschluss 27 versehen, wobei die Anschlüsse 26, 27 elektrisch mit der Leiterplatte verbunden werden, wie in Figur 6 visualisiert ist

Wie bereits oben beschrieben, ist der Spulenträger 7 mit der Leiterplatte 5 verbunden. Dazu weist der Spulenträger 7 mindestens ein erstes Federelement 28 und ein zweites Federelement 29 zur Verbindung des Spulenträgers 7 mit der Leiterplatte 5 auf, wobei die Federelemente 28, 29 aus Kostengründen einteilig mit dem Spulenträger 7 ausgebildet sind. Die Federelemente 28, 29 sind sperrförmig ausgebildet. Der erste Kopf 30 des Federelements 28 umfasst einen ersten Kopfabschnitt 31 und einen zweiten Kopfabschnitt 32, die durch einen ersten Spalt 33 voneinander getrennt sind. Der zweite Kopf 34 des zweiten Federelements 29 umfasst einen ersten Kopfabschnitt 35 und einen zweiten Kopfabschnitt 36, die durch einen zweiten Spalt 37 voneinander getrennt sind. Beim Einführen des ersten Kopfes 30 bzw. zweiten Kopfes 34 in die entsprechenden erste Kopföffnung 41 bzw. zweite Kopföffnung 42 der Leiterplatte 5 werden die Kopfabschnitte 31, 32 bzw. 35, 36 zueinander bewegt, so dass der Spalt 33 bzw. 37 kleiner wird. Nachdem die Köpfe 30, 34 durch die entsprechenden Kopföffnungen auf der Leiterplatte 5 hindurchgeführt wurden, bewegen sich die Kopfabschnitte 31, 32 bzw. 35, 36 wieder zurück und hintergreifen die Leiterplatte 5. Zur besseren Montage weist der Spulenträger 7 noch ein Führungselement 38 auf, welches einteilig mit dem Spulenträger 7 ausgebildet ist.

Hinsichtlich der Montage wird zuerst die Haube 9 auf der Leiterplatte 5 angeordnet. Danach wird die Leiterplatte 5 mit dem Spulenträger 7 verbunden, indem das erste Federlement 28 in die erste Kopföffnung 41 der Leiterplatte 5 und das zweite Federelement 29 in die zweite Kopföffnungen 42 der Leiterplatte 5 eingeführt wird. Danach wird die Leiterplatte 5 mittels eines Steckelements 43 mit dem Deckel 3 verbunden. Dabei wird das Steckelement 43 in die entsprechende Steckdose 44 gesteckt, welche im Deckel 3 angeordnet ist. In einem nächsten Schritt wird die Einheit zumindest umfassend den Deckel 3, die Leiterplatte 5 und den Spulenträger 7 in das zylinderförmige Gehäuse 4 eingeführt. Während des Einführens der Einheit stoßen die als Federelemente ausgestalteten Befestigungsabschnitte 40 an eine innere Wandung des zylinderförmigen Gehäuses 4 und werden in Richtung des Deckels 3 gedrückt. Schließlich wird der Deckel 3 und das zylinderförmige Gehäuse 4 mittels der Klipsverbindung miteinander verbunden. Die Befestigungsabschnitte 40 dienen zur Spieleliminierung, so dass die Leiterplatte 5 fest und klapperfrei innerhalb des Gehäuses 2 angeordnet ist.

Im Ergebnis sind somit der Spulenträger 7 und die Leiterplatte 5 innerhalb des Gehäuses 2 sicher und klapperfrei angeordnet. Alternativ kann auch der der Spulenträger 7 außerhalb des Gehäuses 2 angeordnet sein und die Leiterplatte 5 innerhalb des Gehäuses 2 angeordnet sein.

### Bezugszeichenliste

- 1: Zugangsberechtigungsvorrichtung
- 2: Gehäuse
- 3: Deckel
- 4: zylinderförmiges Gehäuse
- 5: Leiterplatte
- 6: Spule
- 7: Spulenträger
- 8: Betätigungselement
- 9: Haube
- 10: Schriftzug
- 11: Ring
- 12: Sicherungsring
- 13: Aufnahme
- 14: Kontaktelementaufnahme
- 15: erstes Kontaktelement
- 16: zweites Kontaktelement
- 17: erste Öffnung
- 18: zweite Öffnung
- 19: Draht
- 20: erstes Drahtende
- 21: zweites Drahtende
- 22: erster Anschluss
- 23: zweiter Anschluss
- 24: erster Abschnitt
- 25: zweiter Abschnitt
- 26: dritter Anschluss
- 27: vierter Anschluss
- 28: erstes Federelement
- 29: zweites Federelement
- 30: erster Kopf
- 31: erster Kopfabschnitt des ersten Kopfes 30
- 32: zweiter Kopfabschnitt des ersten Kopfes 30
- 33: erster Spalt
- 34: zweiter Kopf
- 35: erster Kopfabschnitt des zweiten Kopfes 34
- 36: zweiter Kopfabschnitt des zweiten Kopfes 34
- 37: zweiter Spalt
- 38: Führungselement
- 39: Schweißverbindung
- 40: Befestigungsabschnitte
- 41: erste Kopföffnung
- 42: zweite Kopföffnung
- 43: Steckelement
- 44: Steckdose

## Patentansprüche

1. Zugangsberechtigungsvorrichtung (1), insbesondere einen Start-Stopp-Taster, für ein Kraftfahrzeug aufweisend ein Gehäuse (2) zur Aufnahme einer Leiterplatte (5) und aufweisend einen Spulenträger (7),
- welcher eine Spule (6) umfasst, die zur Kommunikation mit einer ID-Geber vorgesehen ist,
- und welcher zur Aufnahme von mindestens zwei Kontaktelemente (15, 16) vorgesehen ist, die mit der Spule (6) verbindbar sind,
**dadurch gekennzeichnet, dass**
die Verbindung der Kontaktelemente (15, 16) mit dem Spulenträger (7) mittels einer Pressverbindung ausgebildet ist.

2. Zugangsberechtigungsvorrichtung (1) nach Anspruch 1, **dadurch gekennzeichnet, dass** nach dem Herstellen der Pressverbindung die Spule (6) und die Kontaktelementen (15, 16) miteinander verbindbar ist, insbesondere durch eine Lötverbindung (39) miteinander verbindbar sind.

3. Zugangsberechtigungsvorrichtung (1) nach Anspruch 1 oder 2, **dadurch gekennzeichnet, dass** die Pressverbindung zwischen dem Spulenträger (7) und den Kontaktelemente (15, 16) nachträglich unlösbar ausgebildet ist.

4. Zugangsberechtigungsvorrichtung (1) nach mindestens einem der Ansprüche 1 bis 3, **dadurch gekennzeichnet, dass** der Spulenträger (7) eine Kontaktelementaufnahme (14) zur Anordnung der Kontaktelemente (15, 16) aufweist.

5. Zugangsberechtigungsvorrichtung (1) nach mindestens einem der Ansprüche 1 bis 4, **dadurch gekennzeichnet, dass** die Kontaktelementaufnahme (14) einteilig mit dem Spulenträger (7) ausgebildet ist.

6. Zugangsberechtigungsvorrichtung (1) nach mindestens einem der Ansprüche 1 bis 5, **dadurch gekennzeichnet, dass** der Spulenträger (7) eine rundförmige, insbesondere eine kreisförmige, Aufnahme (13) zur Anordnung der Spule (6) aufweist.

7. Zugangsberechtigungsvorrichtung (1) nach mindestens einem der Ansprüche 1 bis 6, **dadurch gekennzeichnet, dass** die Kontaktelemente (15, 16) vier Anschlüsse (22, 23, 26, 27) aufweisen, wobei ein erster (22) und ein zweiter (23) Anschluss (22, 23) zum Herstellen der elektrischen Verbindung mit der Spule (6) dienen, und wobei ein dritter (26) und ein vierter (27) Anschluss (26, 27) zum elektrischen Verbinden mit der Leiterplatte (5) dienen.

8. Zugangsberechtigungsvorrichtung (1) nach mindestens einem der Ansprüche 1 bis 7, **dadurch gekennzeichnet, dass** die Spule (6) aus einem Draht (19) mit einem ersten Drahtende (20) und einem zweiten Drahtende (21) ausgebildet ist, wobei der erste Anschluss (22) des ersten Kontaktelements (15) einen ersten im Wesentlichen u-förmigen oder im Wesentlichen v-förmigen Abschnitt (24) und der zweite Anschluss (23) des zweiten Kontaktelements (16) einen zweiten im Wesentlichen u-förmigen oder im Wesentlichen v-förmigen Abschnitt (25) aufweist, wobei der erste u-förmige oder erste v-förmige Abschnitt (24) zur Aufnahme des ersten Drahtendes (20) ausgebildet ist und der zweite u-förmige oder zweite v-förmige Abschnitt (25) zur Aufnahme des zweiten Drahtendes (21) ausgebildet ist.

9. Zugangsberechtigungsvorrichtung (1) nach Anspruch 8, **dadurch gekennzeichnet, dass** das erste Drahtende (20) innerhalb des ersten u-förmige oder ersten v-förmige Abschnitts (24) mittels einer Lötverbindung (39) verlötet ist und das zweite Drahtende (21) innerhalb des zweiten u-förmige oder zweiten v-förmige Abschnitts (25) mittels einer Lötverbindung (39) verlötet ist.

10. Zugangsberechtigungsvorrichtung (1) nach mindestens einem der Ansprüche 1 bis 9, **dadurch gekennzeichnet, dass** der Spulenträger (7) mindestens ein erstes Federelement (28) und ein zweites Federelement (29) zur Verbindung des Spulenträgers (7) mit dem Gehäuse (2) und/oder der Leiterplatte (5) aufweist.

11. Zugangsberechtigungsvorrichtung (1) nach Anspruch 10, **dadurch gekennzeichnet, dass** die Federelemente (28, 29) sperrförmig ausgebildet sind, wobei ein Kopf (30, 34) des Federelements (28, 29) einen ersten Kopfabschnitt (31, 35) und einen zweiten Kopfabschnitt (32, 36) umfasst, die durch einen Spalt (33, 37) voneinander getrennt sind.

12. Zugangsberechtigungsvorrichtung (1) nach mindestens einem der Ansprüche 1 bis 11, **dadurch gekennzeichnet, dass** der Spulenträger (7) mindestens ein Führungselement (38) aufweist, welches zur Verbindung mit der Leiterplatte (5) dient.

13. Zugangsberechtigungsvorrichtung (1) nach mindestens einem der Ansprüche 1 bis 12, **dadurch gekennzeichnet, dass** das Führungselement (38) und/oder das Federelement (28, 29) einteilig mit dem Spulenträger (7) ausgebildet ist.

14. Zugangsberechtigungsvorrichtung (1) nach mindestens einem der Ansprüche 1 bis 13, **dadurch gekennzeichnet, dass** der Spulenträger (7) außerhalb des Gehäuses (2) angeordnet ist und die Leiterplatte (5) innerhalb des Gehäuses (2) angeordnet ist.

15. Zugangsberechtigungsvorrichtung (1) nach mindestens einem der Ansprüche 1 bis 14, **dadurch gekennzeichnet, dass** der Spulenträger (7) und die Leiterplatte (5) innerhalb des Gehäuses (2) angeordnet sind.

16. Zugangsberechtigungsvorrichtung (1) nach mindestens einem der Ansprüche 1 bis 15, **dadurch gekennzeichnet, dass** der Spulenträger (7) mindestens einen Befestigungsabschnitt (40) aufweist, der beim Einführen des Spulenträgers (7) in das Gehäuse (2), insbesondere in das zylinderförmige Gehäuse (4), bewegbar ausgebildet ist, wenn der Befestigungsabschnitt (40) eine innerhalb des Gehäuses (2), insbesondere des zylinderförmigen Gehäuses (4), angeordnete Wandung kontaktiert.
